# EUROPÄISCHE PATENTSCHRIFT

(11) **EP 2 397 529 B1**
(45) Veröffentlichungstag und Bekanntmachung des Hinweises auf die Patenterteilung: **31.07.2019**
(21) Anmeldenummer: 11004487.2
(22) Anmeldetag: 01.06.2011
(51) Int. Cl.: B05D 1/28, B05D 3/02, C09D 7/42

(54) **Herstellungsverfahren für eine Schichtanordnung**
Manufacturing method for a layer assembly
Procédé de fabrication d'un agencement de couches

(30) Priorität: 15.06.2010 DE 102010023782
(43) Veröffentlichungstag der Anmeldung: 21.12.2011
(73) Patentinhaber: Amcor Flexibles Singen GmbH, 78224 Singen (Hohentwiel) (DE)
(72) Erfinder: Mennel, Andreas, 78467 Konstanz (DE)
(74) Vertreter: Gernet, Samuel Andreas

(56) Entgegenhaltungen:
- EP-A1- 1 731 582
- DE-A1- 10 115 505
- DE-A1- 10 345 903
- DE-A1-102005 038 608

## Beschreibung

Die Erfindung betrifft ein Coilcoating-Verfahren zur Herstellung einer Schichtanordnung durch Auftragen eines Schutzlacks auf ein Metallsubstrat, mit einem polymerisierbaren acrylatischen Bindemittel durch Coilcoating gemäss Anspruch 1.

Es ist bekannt, auf Metallsubstraten kratzfeste Schutzlacke aufzubringen, um eine strapazierfähige Oberfläche zu erhalten. Derartige, mit einem Schutzlack überzogene Metallsubstrate können beispielsweise als Wandverkleidungen sowohl im Innen- als auch Im Außenbereich eingesetzt werden oder auch als Arbeits-, Ablage- und/oder Tischflächen, für den Fall, dass der Schutzlack eine ausreichende Kratzfestigkeit aufweist. Bekannte Schutzlacke für die vorgenannten Anwendungen sind mit UV-Initiatoren versetzt, so dass der auf ein Metallsubstrat aufgebrachte Schutzlack durch UV-Bestrahlung polymerisiert werden muss. Diese Technologie hat sich bei plattenförmigen Metallsubstraten geringer Breite bewährt, bringt jedoch Insbesondere dann Schwierigkeiten mit sich, wenn der UV-härtbare Schutzlack auf Rollen (Colls), beispielsweise durch Coilcoating aufgebracht und dann durch UV-Bestrahlung vernetzt werden soll. Für eine derartige Anwendung wäre es notwendig UV-Strahler mit einer Breitenerstreckung von mehr als 1,30 m einzusetzen, was mit erheblichen Investitionskosten verbunden wäre. Darüber hinaus sind derart breite UV-Trockner technisch nur schwer realisierbar. Zudem besteht der Nachteil, dass der Lack idealerweise unter Inertgasatmosphäre aufgebracht werden sollte, um eine möglichst hohe Kratzhärte zu erreichen, dies aber bei großen Flächen relativ hohe Betriebskosten zu Folge hat.

Aus der DE 696 18 019 T2 Ist ein Schutzlack für Metalloberflächen bekannt. Dieser enthält als Hauptbindemittel ein auf Basis einer kationischen Vernetzungsreaktion polymerisierbares Bindemittel. Aus der Druckschrift ist es bekannt neben diesem Hauptbindemittel als Additiv ein Acrylat zuzusetzen, welches radikalisch polymerisierbar Ist. Aus der Drucksschrift Ist es weiterhin bekannt zwei unterschiedliche Initiatoren einzusetzen, nämliche einen kationischen Initiator für das Hauptbindemittel und einen radikalischen Initiator für das fakultative Additiv. Die Druckschrift beschreibt weiter, dass sich die beiden Initiatoren hinsichtlich der Aktivierungsenergien unterscheiden können, um die Polymerisation zu verschiedenen Zeitpunkten zu ermöglichen. Der bekannte Schutzlack ist nicht geeignet, um im Coilcoating-Beschichtungsverfahren eingesetzt zu werden.

Aus der DE 100 53 871 A1 ist ein alternativer Schutzlack bekannt, der dazu geeignet und bestimmt ist durch oxidative Trocknung an der Luft auszuhärten. Auch hier wird Acrylat nur als Additiv eingesetzt. Die Druckschrift offenbart zudem den Einsatz unterschiedlicher radikalischer Initatoren.

Aus der DE 103 45 903 A1 ist ein Schutzlack bekannt, der neben einem thermischen Initiatorsystem ein UV-Initiatorsystem aufweist. Hierdurch muss eine Beschichtungsanlage eine UV-Licht-Härtungseinrichtung umfassen, was unter anderem aus Kostengründen, jedoch auch aus Gründen des erhöhten Raumbedarfs, von Nachteil ist.

DE 10 2005 038 608 A1 offenbart eine Zusammensetzung zur Beschichtung von metallischen Oberflächen, insbesondere mittels Coilcoating. Der Grundierlack enthält thermische Initiatoren für ein Korrosionsinhibitorpolymer sowie eine Bindemittelkomponente.

Ausgehend von dem vorbekannten Stand der Technik liegt der Erfindung die Aufgabe zugrunde, ein Verfahren zur Herstellung einer Schichtanordnung mit einer kratzfesten Beschichtung anzugeben.
Diese Aufgabe wird durch das Verfahrens mit den Merkmalen des Anspruchs 1 gelöst.

Vorteilhafte Weiterbildungen der Erfindung sind in den Unteransprüchen angegeben.

Gemäß dem nach dem Konzept der Erfindung ausgebildeten Verfahren zum Herstellen der ein Metallsubstrat umfassenden Schichtanordnung wird zunächst ein Metallsubstrat bereitgestellt, dieses kann bereits mit einem Primer versehen sein oder vor dem Aufbringen des Schutzlackes mit einem Primer versehen werden, der bevorzugt vor dem Aufbringen des Schutzlackes ausgehärtet wird. Es ist auch denkbar Metallsubstrat ohne Primer vorzusehen, um den Schutzlack unmittelbar auf das Metallsubstrat aufzubringen.

Gemäß einem weiteren Verfahrensschritt wird dann der Schutzlack in flüssiger Form durch Coilcoating entweder auf den Primer oder das Metallsubstrat aufgebracht. Daraufhin wird Wärme zugeführt.

Erfindungsgemäss wird ein Temperaturprofil bei der Wärmezufuhr gefahren, nach welchem zunächst eine Temperatur oder ein Temperaturbereich erreicht wird, bei welchem der erste Initiator seinen gewünschten Wirkungsgrad erreicht, also eine Halbwertszeit von gleich oder kleiner als 2s bei einer Temperatur zwischen 140°C und 180°C. Gemäß dem Temperaturprofil wird die Temperatur erhöht bis auf eine zweite Temperatur bzw. einen zweiten Temperaturbereich, bei welcher bzw. in welchem der zweite thermische Initiator seinen optimalen Wirkungsgrad, d.h. die gewünschte Halbwertszeit für die vorliegende Anwendung erreicht, namentlich eine Halbwertszeit von gleich oder kleiner als 2s, in einem Temperaturbereich zwischen 200°C und 250°C.

Wie bereits erläutert, ist es erfindungsgemäss vorgesehen, dass der Schutzlack im Coilcoating-Verfahren aufgebracht wird, wobei der Schutzlack z.B. mittels einer Walze aufgebracht werden kann, wobei es besonders bevorzugt ist, wenn die Geschwindigkeit mit der sich das Metallsubstrat während der Beschichtung relativ zur Beschichtungseinrichtung bewegt aus einem Wertebereich zwischen 30 m/min und 50 m/min, ganz besonders bevorzugt zwischen 50 m/min und 120 m/min gewählt wird. Ganz besonders bevorzugt beträgt diese Relativgeschwindigkeit, die noch weiter bevorzugt durch ausschließliches Bewegen des Metallsubstrates, insbesondere von Coil zu Coil, realisiert wird, etwa 80 m/min.

Der Erfindung liegt der Gedanke zugrunde, dass das oder die polymerisierbare/n, d.h. als Monomere und/oder Oligomere vorliegende/n acrylatische/n Bindemittel mit einem geeigneten ersten thermischen Initiator bereitzustellen, der bei geeigneter Wärmezufuhr eine radikalische Polymerisationsreaktion des/der Bindemittel auslöst, um diese zu polymerisieren und bevorzugt die Polymerketten untereinander zu vernetzen. Anders ausgedrückt liegt der Erfindung der Gedanke zugrunde, zur unmittelbaren oder mittelbaren Beschichtung eines Metallsubstrates, insbesondere eines Leichtmetallsubstrates, wie Aluminium, einen acrylatischen Einbrennlack bereitzustellen, der es erlaubt, zum Auslösen der Polymerisationsreaktion auf eine UV-Bestrahlung zu verzichten und stattdessen auf eine Heizeinrichtung, insbesondere einen Ofen zurückzugreifen, durch die bzw. den das mittels Coilcoating mit dem Schutzlack beschichtete Metallsubstrat hindurch transportierbar ist, um durch die Zuführung von Wärme einen Zerfall des ersten thermischen Initiators in Radikale und damit eine radikalische Polymerisationsreaktion und bevorzugt auch eine Vernetzungsreaktion auszulösen. Dabei ist der erste Initiator bevorzugt derart gewählt, dass dieser bei einer Temperatur unterhalb des Siedepunktes des Bindemittels zerfällt. Bevorzugt erreicht der erste Initiator eine Halbwertszeit von gleich oder weniger als 2s (Sekunden), vorzugsweise von weniger als 1s unterhalb der Siedepunkttemperatur des Bindemittels. Unter der Halbwertszeit wird die Zeitspanne verstanden, innerhalb derer sich die Menge der die Poymerisationsreaktion initiierenden Gruppen, beispielsweise von Radikalgruppen, halbiert. Es wird also erstmals der Weg beschritten, zum Herstellen belastbarer (strapazierfähiger) Oberflächen auf Metallsubstraten einen thermisch härtbaren Schutzlack auf Basis eines polymerisierbaren acrylatischen Bindemittels einzusetzen, dem vorzugsweise anstelle eines bisher üblichen UV-Initiators, ein thermischer Initiator zugesetzt ist, der dazu geeignet und bestimmt ist, das acrylatische Bindemittel zu polymerisieren und ggf. zu vernetzen. Bevorzugt wird die auf diese Weise erhaltene Schichtanordnung, bei welcher sich der Schutzlack alternativ unmittelbar auf dem Metallsubstrat oder auf einem auf dem Metallsubstrat vorgesehenen ein- oder mehrschichtigen Primer (Haftvermittler) befindet, als Verkleidung für Wände im Außen- oder Innenbereich, für Möbel, Maschinen und/oder als Arbeitsoberfläche, beispielsweise in Küchen, Laboren und/oder auf Tischen eingesetzt. Ein weiterer wesentlicher Vorteil eines nach dem Konzept der Erfindung ausgebildeten Schutzlackes ist, dass dieser nach der Polymerisation weniger spröde ist als bekannte, UV-härtbare Schutzlacke, so dass sich die nach dem Konzept der Erfindung erhaltene Schichtanordnung, umfassend eine Schutzlackschicht, verbessert dreidimensional verformbar ist. Die Ausbildung des Schutzlackes als Einbrennlack ist bereits insofern nicht naheliegend, als dass mit einer erheblichen Verdampfung von Lackbestandteilen bei der Wärmezufuhr, d.h. bei der Erhitzung des Metallsubstrates auf die Polymerisationstemperatur, von in der Regel über 100°C gerechnet werden muss. Darüber hinaus bestand die Schwierigkeit, dass die verdampfenden Lackbestandteile Kondensat in der Coil-Coating--Anlage bilden und auf das dekorativ lackierte Band zurücktropfen und dies damit verschmutzen.

Zur Minimierung von Verdampfungserscheinungen von Schutzlackbestandteilen bei der Wärmezufuhr wird erfindungsgemäss vorgeschlagen zusätzlich zu dem vorgenanten ersten Initiator, bei welchem es sich bevorzugt um ein aromatisches Peroxid handelt, einen von dem ersten Initiator unterschiedlichen zweiten thermischen Initiator einzusetzen. Diese Initiatoren unterschieden sich hinsichtlich des Temperaturbereichs, in welchem eine bestimmte Halbwertszeit erreicht wird. Wenn der Temperaturbereich des zweiten Initiators, bei dem die gewünschte Halbwertszeit erreicht wird, höher liegt, beispielsweise um mindestens 20°C - 40°C höher liegt als der Temperaturbereich des ersten Initiators, bei welchem diese die gewünschte Halbwertszeit erreicht, resultiert hieraus ein erhöhter Polymerisationsgrad, weil das bereits polymerische Material aufgeschmolzen wird und dadurch neue Kettenpaarungen aufgrund der erhöhten Dynamik möglich sind.

Durch den Einsatz von zwei unterschiedlichen thermischen Initiatoren, die die gewünschte Halbwertszeit bei unterschiedlichen Temperaturen als Stoffparameter aufweisen bzw. erreichen, können die Verdampfungserscheinungen bei der Wärmezufuhr dadurch minimiert werden, dass in einem ersten, niedrigeren Temperaturbereich der erste thermische Initiator seine optimale Zerfallswirkung entfaltet und somit die radikalische Polymerisationsreaktion des acrylatischen Bindemittels auslöst und es auf diese Weise bei einer vergleichsweise niedrigen ersten Temperatur zu einer Vorpolymerisierung des Schutzlackes auf dem Metallsubstrat kommt, und dass durch weitere Wärmezufuhr eine Temperatur erreicht wird, bei der der zweite Initiator seine optimale (gewünschte) Halbwertszeit aufweist. Durch die Vorpolymerisierung aufgrund der Zerfallsreaktion des ersten thermischen Initiators wird ein Teil des Schutzlackes bereits gebunden bzw. die Kettenlänge verlängert sich, vorzugsweise derart, dass bei einer weiteren Temperaturerhöhung Verdampfungserscheinungen vermieden, zumindest jedoch reduziert werden. Die Polymerisationsreaktion wird mittels des zweiten thermischen Initiators, der seine gewünschte Wirkung bei einer höheren zweiten Temperatur bzw. in einem höheren zweiten Temperaturbereich entfaltet fortgesetzt bzw. zu Ende geführt. Insbesondere tritt durch den Einsatz des zweiten thermischen Initiators insgesamt eine Beschleunigung der Polymerisationsreaktion ein, bis zu dem gewünschten Polymerisierungsgrad von vorzugsweise über 85-%, noch weiter bevorzugt 90-%, noch weiter bevorzugt über 95-%, ganz besonders bevorzugt zumindest näherungsweise 100%.

In Weiterbildung der Erfindung ist mit Vorteil vorgesehen, dass es sich bei dem ersten thermischen Initiator um ein aromatisches Peroxid, insbesondere Dibenzoylperoxid handelt, oder dass der erste thermische Initiator zumindest ein aromatisches Peroxid, insbesondere das vorerwähnte Dibenzoylperoxid umfasst. In diesem Fall wird ein aromatisches Peroxid eingesetzt, welches in einem Temperaturbereich unterhalb der Siedetemperatur des Bindemittels, namentlich in einem Temperaturbereich zwischen etwa 140°C und 180°C eine Halbwertszeit (Zerfallsrate) von gleich oder weniger als 2s aufweist. Bevorzugt beträgt die Halbwertszeit weniger als 1s in einem Temperaturbereich zwischen 140°C und 180°C. Alternativ ist es denkbar, als ersten thermischen Initiator ein aliphatisches Diperoxid oder ein aliphatisches Peroxid, beispielsweise Dilaurylperoxid zu verwenden. Vorteilhaft ist es wenn, die Spaltprodukte des thermischen Initiators nach dem Zerfall entweder gut bei den Einbrennbedingungen abgedampft werden, oder wenn diese Spaltprodukte in der Lackmatrix gut aufgenommen und optisch nicht sichtbar sind.

Im Falle des Vorsehens von aromatischem Peroxid als erster thermischer Initiator ist es besonders bevorzugt, wenn es sich bei dem zweiten thermischen Initiator um ein aliphatisches Diperoxid handelt oder wobei der zweite thermische Initiator zumindest aliphatisches Diperoxid, insbesondere 2,5 Dimethyl-2,5-di(tert-butylperoxy)hexan, umfasst.

Um die Eigenschaften des Lackes zu steuern, können Füllstoffe beigemischt werden. Beispiele sind Mattierungsmittel oder Mikropartikel aus TiO₂, SiO₂, Al₂O₃ (Korund), ferner mikronisiertes SiO₂. Die Mengen an diesen Füllstoffen können bis zu 20 Gew.-%, bezogen auf den Lack, vorzugsweise 1 bis 20 Gew.-% und insbesondere 8 bis 12 Gew.-% betragen. Um die Schutzwirkung des Lackes zu optimieren und diesen insbesondere unanfällig gegen Verkratzen zu machen, Ist in Weiterbildung der Erfindung mit Vorteil vorgesehen, dass dem Schutzlack Nanopartikel, Insbesondere auf TiO₂-und/oder SiO₂-Basis zugesetzt sind. Dabei ist es besonders bevorzugt, wenn die Nanopartikel derart chemisch vorliegen, dass diese bei der vorgenannten Polymerisationsreaktion in die Ketten mit eingebaut werden und/oder Vernetzungsbrücken zwischen unterschiedlichen Ketten ausbilden, wodurch eine optimierte Bindung der Nanopartikel in dem polymerisierten Schutzlack gewährleistet wird. Es handelt sich bei den Nanopartikeln beispielsweise um acrylatmodifizierte SiO₂-Nanoteilchen (ca.10 nm) im Gelzustand (völlig transparent) in einer Konzentration von 50 Gew.-% bezogen auf das Bindemittel.

Zweckmässig ist es, wenn der Gewichtsanteil der Nanopartikel am Gesamtgewicht des Schutzlackes vor der Polymerisationsreaktion bis zu 70%, bevorzugt bis zu 50%, und vorteilhaft bis etwa 30% liegt. Eine bevorzugte untere Grenze ist wenigstens 10% an Nanopartikeln. Bevorzugte Wertebereiche sind 10 bis 50%, resp. 10 bis 30%, Gewichtsanteil der Nanopartikel am Gesamtgewicht des Schutzlackes. Es kann auch bevorzugt sein, dass der vorgenannte Gewichtsanteil mehr als 50% beträgt.

Ein weiterer Vorteil der Ausbildung des Schutzlackes für ein Metallsubstrat als thermisch härtbarer Lack besteht darin Lösungsmittel, beispielsweise für Zusätze oder sonstige Lackbestandteile zusetzen zu können, was bei UVhärtbaren Schutzlacken für Metallsubstrate nicht oder nur bedingt möglich war, weil die Lösungsmittel nicht ausdampfen konnten.

Besonders zweckmäßig ist es, wenn der Schutzlack Mattierungsmittel, beispielsweise Mattierungskieselsäure umfasst, um einen gewünschten Mattierungsgrad, von beispielsweise 40 - 110° Glanz herstellen zu können. Ganz besonders bevorzugt wird Mattierungsmittel in einer Menge beigesetzt, um einen Mattierungsgrad zwischen 60 und 100, vorzugsweise zwischen 70 und 90 zu erreichen, messbar mit einem Glanzmeßgerät micro-TRI-gloss der Firma BYK-Gardner (z.B. Cat.No:4430, Ser. No: 10006819) unter einem 60° Winkel.

Ganz besonders bevorzugt hat der Schutzlack nach seiner Aushärtung eine Kratzfestigkeit aus einem Wertebereich von 0,5 bis 1,0N, vorzugsweise >1,0N gemessen mit einem Erichsen Model 413 Drehtellerkratztest mittels Diamantnadel nach DIN EN438.

Möglich ist es auch, in dem nach dem Konzept der Erfindung ausgebildeten Schutzlack Pigmente, vorzugsweise in einem Gewichtsanteil zwischen 1% und 15% vorzusehen. Besonders bevorzugt eignen sich Pigmente auf Basis Polyamid oder organisch nachbehandelten Kleselsäuren.

Die Erfindung führt auch auf eine Schichtanordnung mit einem flächigen oder dreidimensional ausgeformten Metallsubstrat, Insbesondere ein Leichtmetallsubstrat, vorzugsweise ein Aluminiumsubstrat. Unter Aluminiumsubstrat wird dabei zum einen sowohl Reinaluminium als auch eine Aluminiumlegierung verstanden. Neben dem Metallsubstrat bzw. der Metallschicht umfasst die Schichtanordnung als Mindestanforderung eine weitere Schicht, nämlich eine Schutzlackschicht, die hergestellt ist durch thermisch initiiertes radikalisches Polymerisieren des nach dem Konzept der Erfindung ausgebildeten Schutzlackes, entweder unmittelbar auf dem Metallsubstrat oder auf einer auf dem Metallsubstrat vorgesehenen Primer-Schicht, die ggf. aus Teilschichten bestehen kann, oder von einer einzigen Gradientenschicht oder homogenen Schicht gebildet sein kann. Ganz besonders bevorzugt handelt es sich bei der Schichtanordnung um eine Verkleidung, insbesondere für Wände im Innen- oder Außenbereich. Alternativ handelt es sich bei der Schichtanordnung um eine Nutz- bzw. Arbeitsfläche, beispielsweise eine Arbeitstisch-, Esstisch- oder Allgemeintischfläche. Auch ist die Schichtanordnung als Deckenverkleidung, als Bestandteil eines Möbelstücks als Kraftfahrzeugteil, als Maschinenteil, insbesondere Maschinenverkleidung od.dgl. ausgebildet. Durch die Ausbildung der Schutzlackschicht als Einbrennschicht, d.h. thermisch härtbarer Schicht kann die Schichtanordnung auf vergleichsweise einfache und kostengünstige Weise realisiert werden, und zwar durch Auftragen des Schutzlackes im sogenannten Coilcoating-Verfahren, also insbesondere mit Hilfe von mindestens einer Walze, die den Schutzlack nach Abwickeln des, ggf. mit einer Primer-Schicht beschichteten Metallsubstrates von einem Coil (Rolle) aufgebracht wird, wobei es besonders bevorzugt ist, wenn das Metallsubstrat nach dem thermischen Aushärten des nach dem Konzept der Erfindung ausgebildeten Schutzlackes auf dem Metallsubstrat bzw. einem auf dem Metallsubstrat vorgesehenen Primer wieder zu einem Coil aufgewickelt wird bzw. dass die Schichtanordnung als Coil vorliegt und von diesem bedarfsweise portioniert werden kann.

Bevorzugt wird Schutzlack mit einem Flächengewicht aus einem Wertebereich zwischen 5 und 25 g/m², ganz besonders bevorzugt zwischen 10 und 20 g/m² vorgesehen.

Bevorzugt beträgt die Stärke, d.h. Dicke der Schutzlackschicht zwischen 5 und 15 µm, vorzugsweise zwischen 7 und 12 µm. Im Falle des Vorsehens eines Primers weist diese bevorzugt eine Schichtdicke aus einem Wertebereich zwischen 1 µm und 5 µm, ganz besonders bevorzugt zwischen 3 µm und 4 µm auf. Das Metallsubstrat, bei dem es sich bevorzugt um ein Leichtmetallsubstrat, insbesondere ein Aluminiumsubstrat, handelt, weist für den Anwendungszweck Schichtstoffplatten bevorzugt eine Schichtdicke zwischen 50 und 150 µm auf und für die Anwendung als Automotivlackierung eine Schichtdicke aus einem Wertebereich zwischen 100 und 400 µm.

Wie bereits angedeutet, liegt es im Rahmen der Erfindung, die Schutzlackschicht unmittelbar auf dem Metallsubstrat auf einem auf dem Metallsubstrat befindlichen, ein- oder mehrschichtigen Primer anzuordnen. Ganz besonders bevorzugt ist es, wenn der Primer, bei welchem es sich bevorzugt um einen Lack handelt Mattierungsmittel und/oder Pigmente enthalt. Ganz besonders bevorzugt handelt es sich um einen Epoxy, Acrylat, oder Polyester-Primer.

Wie ebenfalls bereits angedeutet ist es besonders bevorzugt, wenn die Schichtanordnung als Rolle, d.h. als Coil vorliegt wobei die Breitenerstreckung bevorzugt gleich oder größer 1,30 m ist, wobei sich eine derart breite Schichtanordnung optimal mit dem nach dem Konzept der Erfindung ausgebildeten Schutzlack herstellen lässt.
Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: ein erstes Ausführungsbeispiel eines Schichtaufbaus,
- Fig. 2: ein zweites Ausführungsbeispiel eines Schichtaufbaus,
- Fig. 3: ein Ausführungsbeispiel eines Halbzeugs, und
- Fig. 4: In einer schematischen Darstellung eine Vorrichtung zum Herstellen einer Schutzlackschicht auf einem Metallsubstrat.

In den Figuren sind gleiche Elemente und Elemente mit der gleichen Funktion mit den gleichen Bezugszeichen gekennzeichnet.

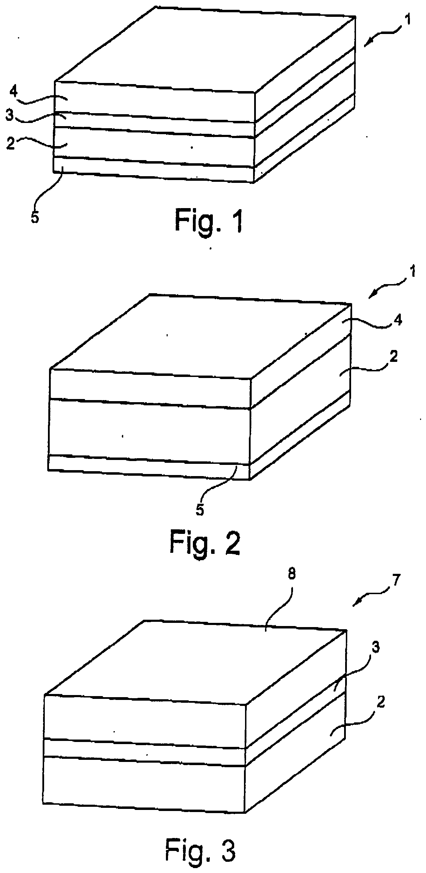

In Fig. 1 ist eine Schichtanordnung 1, hier als Decken- oder Wandverkleidung gezeigt. Alternativ kann es sich um ein Kraftfahrzeugteil handeln. Die Schichtanordnung 1 umfasst eine von einem Metallsubstrat 2 gebildete Metallschicht. In dem gezeigten Ausführungsbeispiel handelt es sich bei dem Metallsubstrat 2 um eine Aluminiumlegierung. Diese ist bzw. wurde vor der weiteren Beschichtung entfettet. Die Metallsubstratschicht hat eine Dickenerstreckung von in dem gezeigten Ausführungsbeispiel etwa 50 bis 160 µm.

In der Zeichnungsebene oberhalb des Metallsubstrates 2 befindet sich unmittelbar auf dem Metallsubstrat 2 ein Primer, hier epoxybasiert. Die von dem Primer 3 gebildete Primer-Schicht hat eine Dickenerstreckung von 1-5 µm (Flächengewicht etwa 1 bis 5 g/m²).

Der Primer 3 ist sandwichartig aufgenommen zwischen dem Metallsubstrat 2 und einer Schutzlackschicht 4 mit einem Flächengewicht von 5 bis 20 g/m². Die Schutzlackschicht 4 bildet die äußerste bzw. oberste Schicht der Schichtanordnung 1. Die Schutzlackschicht 4 wurde gebildet durch thermisches Polymerisieren eines fluid aufgebrachten Schutzlackes auf den Primer 3. In dem gezeigten Ausführungsbeispiel hat der die Schutzlackschicht 4 bildende Schutzlack folgende Zusammensetzung:
Monomer/Oligomeres Bindemittel: 65-75%
Thermoinitiator 1: 0,5-1,5%
Thermoinitiator 2: 0,5-1,5%
Pigment/Mattierungsmittel: 0-10%
Lösemittel: 12 - 34%

Auf der von der Schutzlackschicht 4 abgewandten Seite grenzt an das Metallsubstrat 2 eine Haftvermittler-Schicht 5 mit einem Flächengewicht zwischen etwa 5 bis 15 g/m² an.

Grundsätzlich sei angemerkt, dass auf die mit dem Bezugszeichen 5 gekennzeichnete Schicht bei Bedarf verzichtet werden kann oder diese Schicht um weitere Schichten ergänzt werden kann.

Fig. 2 zeigt eine Alternative, einfacher aufgebauter Schichtanordnung 1. Diese umfasst neben dem Metallsubstrat 2 (Dicke 100 bis 400µm), welches ebenfalls von einer Aluminiumlegierung gebildet Ist eine Schutzlackschicht 4 (Flächengewicht 5 bis 20g/m²), die eine äußerste Schicht der Schichtanordnung 1 bildet. Die Schutzlackschicht 4 befindet sich unmittelbar auf dem Metallsubstrat 2 und ist gebildet von einem Schutzlack, dessen polymerisierbares acrylatischen Bindemittel thermisch unmittelbar auf dem Metallsubstrat 2 durch Wärmezufuhr polymerisiert wurde. Der Polymerisierungsgrad beträgt >90%. Auf der von der Schutzlackschicht 4 abgewandten Seite des Metallsubstrates befindet sich eine Haftvermittlerschicht 5 mit einem Flächengewicht zwischen 5 und 15g/m².

In Fig. 3 ist ein Halbzeug 7 gezeigt, welches während der Herstellung einer Schichtanordnung entsteht. Dieses Ist üblicherweise als Coil gewickelt und lediglich der Übersichtlichkeit halber abgewickelt dargestellt. Das Halbzeug 7 umfasst ein Metallsubstrat 2, hier eine Leichtmetalllegierung, auf welcher sich eine von einem Primer 3 gebildete Primer-Schlcht befindet. Auf diesem Primer 3 wurde ein Schutzlack 8 im fluiden Zustand aufgebracht. Dies bedeutet, dass der Schutzlack 8 bei dem Halbzeug 7 noch fluid Ist mit der Absicht zur Herstellung der Schichtanordnung thermisch gehärtet, d.h. polymerisiert und bevorzugt auch vernetzt zu werden.

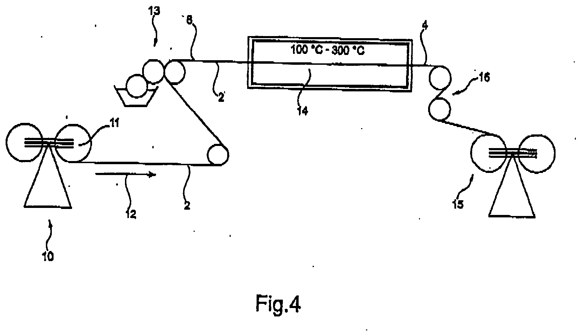

In Fig. 4 ist stark schematisiert eine Möglichkeit zur Herstellung eines Halbzeugs, beispielsweise eines Halbzeugs gemäß Fig. 3 und/oder einer Schichtanordnung, beispielsweise gemäß Fig. 1 oder 2 gezeigt.

Die Vorrichtung 9 umfasst eine Abwickeleinrichtung 10 zum Abwickeln eines flächigen Metallsubstrats 2, welches ggf. schon mit einem Primer und/oder anderen Schichten versehen ist von einem Coil 11 (Rolle). Bevorzugt Ist die sich in die Zeichnungsebene hinein erstreckende Breitenerstreckung des Coils 11 und damit des Metallsubstrates 12 größer als 1,30m. Der Pfeil 12 gibt die Abwickelrichtung an. Das abgewickelte Metallsubstrat 2 durchläuft eine Beschichtungseinrichtung 13, hier eine Coilcoating-Beschichtungseinrichtung, mit welcher Schutzlack entweder unmittelbar auf das Metallsubstrat 2 oder eine ggf. auf diesem vorgesehenen Primer (nicht gezeigt) aufgebracht wird. Das mit Schutzlack 8 beschichtete Metallsubstrat 2 wird in einen Heizofen 14 (Lufttrockner) geführt mit welchem ein bestimmtes Temperaturprofil gefahren wird, um einen Temperaturbereich zu erreichen, bei welchem von dem im Schutzlack befindlichen ersten Initiator eine gewünschte Zerfallsrate erreicht wird. Danach wird ein zweiter, höherer Temperaturbereich weiter in Förderrichtung erreicht, bei dem ein zweiter thermischer Initiator sein Zerfallsratenoptimum erreicht, so dass spätestens am Ende des Heizofens 14 der Schutzlack 8 zu einer Schutzlackschicht 4 polymerisiert ist. Das mit der Schutzlackschicht 4 versehene Metallsubstrat 2 durchläuft eine Kühlstrecke 16 und wird am Ende des Prozesses mittels einer Aufwickeleinrichtung 15 wieder aufgerollt.

Im Folgenden sind einige Zusammensetzungsbeispiele des Schutzlackes für unterschiedliche Anwendungen aufgeführt:
1. Innenbereich (Küche/Schränke/Wände)
   Monomer/Oligomeres Bindemittel mit Nano-Teilchen: 65-75%
   Thermoinitiator 1: 0,5-1,5%
   Thermoinitiator 2: 0,5-1,5%
   Pigment/Mattierungsmittel: 0-10%
   Lösemittel: 12 - 34%
2. Aussenbereich (Automotive/Zierteile/Exterieure)
   UV-Beständiges Monomer/Oligomeres Bindemittel: 65-75%
   Thermoinitiator 1: 0,5-1,5%
   Thermoinitiator 2: 0,5-1,5%
   Pigment/Mattierungsmittel: 0-10%
   UV-Absorber: 0,5-1,0%
   Lösemittel: 11 - 35%

### Bezugszeichenliste

- 1: Schichtanordnung
- 2: Metallsubstrat
- 3: Primer
- 4: Schutzlackschicht
- 5: Haftvermittler-Schicht
- 6: Haftvermittler-Schicht
- 7: Halbzeug
- 8: Schutzlack
- 9: Vorrichtung
- 10: Abwickeleinrichtung
- 11: Coil
- 12: Pfeil
- 13: Beschichtung
- 14: Heizofen
- 15: Aufwickeleinrichtung
- 16: Kühlstrecke

## Patentansprüche

1. Coilcoating-Verfahren zum Herstellen einer Schichtanordnung (1), umfassend ein Metallsubstrat (2) sowie eine Schutzlackschicht (4) mit den Schritten:
• Bereitstellen eines Metallsubstrates (2);
• Aufbringen eines Schutzlackes (8) mit einem polymerisierbaren acrylatischen Bindemittel und mit einem ersten thermischen Initiator, mit dem durch Wärmezufuhr eine radikalische Polymerisationsreaktion des Bindemittels unmittelbar auf dem Metallsubstrat (2) oder auf einem auf dem Metallsubstrat (2) vorgesehenen Primer (3) auslösbar ist und mit einem von dem ersten Initiator unterschiedlichen zweiten thermischen Initiator durch Coilcoating, wobei der erste Initiator eine Halbwertszeit von kleiner oder gleich 2s bei einer Temperatur aus einem Wertebereich zwischen 140-180°C und der zweite Initiator eine Halbwertszeit von kleiner oder gleich 2s bei einer Temperatur aus einem Wertebereich zwischen 200-250°C aufweist;
• Zuführen von Wärme und dadurch Auslösen einer die Polymerisierung des Bindemittels auslösenden Zerfallreaktion des ersten thermischen Initiators bei einer Temperatur zwischen 140-180°C und einer die Polymerisierung des Bindemittels beschleunigenden und/oder vervollständigenden Zerfallsreaktion des zweiten thermischen Initiators bei einer Temperatur zwischen 200-250°C.

2. Verfahren nach Anspruch 1, **dadurch gekennzeichnet, dass** das Metallsubstrat (2) vor dem Aufbringen des Schutzlackes (8) mit einem Primer (3) beschichtet wird, oder dass das bereitgestellte Metallsubstrat (2) bereits mit einem Primer (3) versehen ist.

3. Verfahren nach einem der Ansprüche 1 oder 2, **dadurch gekennzeichnet, dass** der Schutzlack (8) mit einer Geschwindigkeit des Metallsubstrates (2) relativ zu der Coilcoating-Beschichtungseinrichtung aus einem Wertebereich zwischen 30 m/min und 150 m/min, bevorzugt zwischen 50 m/min und 120 m/min, besonders bevorzugt von etwa 80 m/min aufgebracht wird.

4. Verfahren nach einem der Ansprüche 1 bis 3, **dadurch gekennzeichnet, dass** der erste thermische Initiator ein aromatisches Peroxid, insbesondere Dibenzoylperoxid umfasst, oder dass der erste thermische Initiator ein aliphatisches Diperoxid umfasst, und/oder dass der erste thermische Initiator ein aliphatisches Peroxid, insbesondere Dilaurylperoxid umfasst.

5. Verfahren nach einem der Ansprüche 1 bis 4, **dadurch gekennzeichnet, dass** der zweite thermische Initiator ein aromatisches Peroxid, insbesondere Dibenzoylperoxid ist oder umfasst, oder dass der zweite thermische Initiator ein aliphatisches Diperoxid, insbesondere 2,5 Dimethyl - 2,5 - di(tert-butylperoxy)hexan, ist oder umfasst, oder dass der zweite thermische Initiator ein aliphatisches Peroxid, insbesondere Dilaurylperoxid, ist oder umfasst.

6. Verfahren nach einem der vorhergehenden Ansprüche, **dadurch gekennzeichnet, dass** der erste Initiator eine Halbwertszeit von kleiner oder gleich 2s bei einer Temperatur, die tiefer ist als die Siedetemperatur des Bindemittels, und der zweite Initiator eine Halbwertszeit von kleiner oder gleich 2s bei einer Temperatur, die höher ist als die Siedetemperatur des Bindemittels, aufweist.

7. Verfahren nach einem der vorhergehenden Ansprüche, **dadurch gekennzeichnet, dass** der Schutzlack (8) Nanopartikel, insbesondere TiO₂ oder SiO₂, umfasst, die vorzugsweise mit dem Bindemittel vernetzbar sind.

8. Verfahren nach Anspruch 7, **dadurch gekennzeichnet, dass** der Gewichtsanteil der Nanopartikel bis zu 70%, zweckmässig wenigstens zwischen 10% und vorteilhaft zwischen 10 und 50% beträgt.

9. Verfahren nach einem der vorhergehenden Ansprüche, **dadurch gekennzeichnet, dass** der Schutzlack (8) Lösungsmittel, insbesondere Ester und Ketone, und/oder Mattierungsmittel, insbesondere Kieselsäuren und Polyamidwachse, und/oder Pigmente, insbesondere anorganische und organische feindispergierte Pigmente enthält, die keine Katalyse auf die beiden Initiatoren ausüben.

10. Verfahren nach einem der vorhergehenden Ansprüche, **dadurch gekennzeichnet, dass** die Polymerisierung mittels dem zweiten thermischen Initiator solange fortgesetzt wird, bis das Bindemittel einen Polymerisierungsgrad über 85 % aufweist.

## Claims

1. Coil coating method for producing a layer arrangement (1) having a metal substrate (2) and a protective lacquer layer (4), comprising the following steps:
• providing a metal substrate (2);
• applying a protective lacquer (8) by means of coil coating, which lacquer comprises a polymerisable acrylate binder and a first thermal initiator, by means of which a free-radical polymerization reaction of the binder directly on the metal substrate (2) or on a primer (3) provided on the metal substrate (2) can be initiated by supplying heat, and a second thermal initiator which is different from the first initiator, wherein the first initiator has a half-life of less than or equal to 2 s at a temperature in a range of between 140 and 180°C and the second initiator has a half-life of less than or equal to 2 s at a temperature in a range of between 200 and 250°C;
• supplying heat and thereby initiating a decomposition reaction of the first thermal initiator, which reaction initiates the polymerisation of the binder, at a temperature between 140 and 180°C and initiating a decomposition reaction of the second thermal initiator, which reaction accelerates and/or completes the polymerisation of the binder, at a temperature between 200 and 250°C.

2. Method according to claim 1, **characterised in that** the metal substrate (2) is coated with a primer (3) before the application of the protective lacquer (8), or **in that** the provided metal substrate (2) is already provided with a primer (3).

3. Method according to either claim 1 or claim 2, **characterised in that** the protective lacquer (8) is applied at a speed of the metal substrate (2) relative to the coil-coating coating device, in a range of between 30 m/min and 150 m/min, preferably between 50 m/min and 120 m/min, and more preferably is approximately 80 m/min.

4. Method according to any of claims 1 to 3, **characterised in that** the first thermal initiator comprises an aromatic peroxide, in particular dibenzoyl peroxide, or **in that** the first thermal initiator comprises an aliphatic diperoxide, and/or **in that** the first thermal initiator comprises an aliphatic peroxide, in particular dilauryl peroxide.

5. Method according to any of claims 1 to 4, **characterised in that** the second thermal initiator is or comprises an aromatic peroxide, in particular dibenzoyl peroxide, or **in that** the second thermal initiator is or comprises an aliphatic diperoxide, in particular 2,5 dimethyl- 2,5-di(tert-butylperoxy)hexane, or **in that** the second thermal initiator is or comprises an aliphatic peroxide, in particular dilauryl peroxide.

6. Method according to any of the preceding claims, **characterised in that** the first initiator has a half-life of less than or equal to 2s at a temperature lower than the boiling temperature of the binder, and the second initiator has a half-life of less than or equal to 2s at a temperature which is higher than the boiling point of the binder.

7. Method according to any of the preceding claims, **characterised in that** the protective lacquer (8) comprises nanoparticles, in particular TiO2 or SiO2, which preferably can be crosslinked with the binder.

8. Method according to claim 7, **characterised in that** the weight fraction of the nanoparticles is up to 70%, expediently is at least 10% and advantageously is between 10 and 50%.

9. Method according to any of the preceding claims, **characterised in that** the protective lacquer (8) contains solvents, in particular esters and ketones, and/or matting agents, in particular silicic acids and polyamide waxes, and/or pigments, in particular inorganic and organic finely dispersed pigments, that do not carry out catalysis on the two initiators.

10. Method according to any of the preceding claims, **characterised in that** the polymerisation is continued by means of the second thermal initiator until the binder has a degree of polymerisation that is over 85%.

## Revendications

1. Procédé de laquage en bande pour la fabrication d'un système de couches (1), comprenant un substrat métallique (2) ainsi qu'une couche (4) de vernis de protection, comprenant les étapes suivantes :
• fourniture d'un substrat métallique (2) ;
• application, par laquage en bande, d'un vernis de protection (8) comprenant un liant de type acrylate polymérisable et un premier amorceur thermique, à l'aide duquel il est possible de déclencher par un apport de chaleur une réaction de polymérisation radicalaire du liant directement sur le substrat métallique (2) ou sur une couche primaire (3) prévue sur le substrat métallique (2), ainsi qu'un deuxième amorceur thermique, différent du premier amorceur, le premier amorceur présentant une demi-vie inférieure ou égale à 2 s à une température appartenant à une gamme de valeurs entre 140 et 180 °C, et le deuxième amorceur présentant une demi-vie inférieure ou égale à 2 s à une température appartenant à une gamme de valeurs entre 200 et 250°C ;
• apport de chaleur et, de ce fait, déclenchement d'une réaction de décomposition, déclenchant la polymérisation du liant, du premier amorceur thermique à une température entre 140 et 180 °C et d'une réaction de décomposition, accélérant et/ou parachevant la polymérisation du liant, du deuxième amorceur thermique à une température entre 200 et 250°C.

2. Procédé selon la revendication 1, **caractérisé en ce que** le substrat métallique (2) est, avant application du vernis de protection (8), revêtu d'une couche primaire (3), ou **en ce que** le substrat métallique fourni (2) est déjà pourvu d'une couche primaire (3).

3. Procédé selon l'une des revendications 1 ou 2, **caractérisé en ce que** le vernis de protection (8) est appliqué pour une vitesse du substrat métallique (2) par rapport au dispositif de revêtement par laquage en bande, appartenant à une gamme de valeurs entre 30 m/min et 150 m/min, de préférence entre 50 m/min et 120 m/min, d'une manière particulièrement préférée d'environ 80 m/min.

4. Procédé selon l'une des revendications 1 à 3, **caractérisé en ce que** le premier amorceur thermique comprend un peroxyde aromatique, en particulier le peroxyde de dibenzoyle, ou **en ce que** le premier amorceur thermique comprend un diperoxyde aliphatique, et/ou **en ce que** le premier amorceur thermique comprend un peroxyde aliphatique, en particulier le peroxyde de dilauryle.

5. Procédé selon l'une des revendications 1 à 4, **caractérisé en ce que** le deuxième amorceur thermique est ou comprend un peroxyde aromatique, en particulier le peroxyde de dibenzoyle, ou **en ce que** le deuxième amorceur thermique est ou comprend un diperoxyde aliphatique, en particulier le 2,5-diméthyl-2,5-di(tert-butylperoxy)hexane, ou **en ce que** le deuxième amorceur thermique est ou comprend un peroxyde aliphatique, en particulier le peroxyde de dilauryle.

6. Procédé selon l'une des revendications précédentes, **caractérisé en ce que** le premier amorceur présente une demi-vie inférieure ou égale à 2 s à une température inférieure à la température d'ébullition du liant, et le deuxième amorceur présente une demi-vie inférieure ou égale à 2 s à une température supérieure à la température d'ébullition du liant.

7. Procédé selon l'une des revendications précédentes, **caractérisé en ce que** le vernis de protection (8) comprend des nanoparticules, en particulier du TiO₂ ou du SiO₂, qui de préférence sont réticulables avec le liant.

8. Procédé selon la revendication 7, **caractérisé en ce que** la proportion en poids des nanoparticules va jusqu'à 70 %, et est avantageusement d'au moins 10 % et de préférence comprise entre 10 et 50 %.

9. Procédé selon l'une des revendications précédentes, **caractérisé en ce que** le vernis de protection (8) contient des solvants, en particulier des esters et des cétones, et/ou des agents de matage, en particulier des silices et des cires de polyamide, et/ou des pigments, en particulier des pigments organiques ou inorganiques finement dispersés, qui n'exercent aucune catalyse sur les deux amorceurs.

10. Procédé selon l'une des revendications précédentes, **caractérisé en ce que** la polymérisation est poursuivie avec le deuxième amorceur thermique jusqu'à ce que le liant présente un degré de polymérisation supérieur à 85 %.
